Europäisches Patentamt

European Patent Office

Office européen des brevets

(19)

(11) **EP 0 554 749 B1**

(12) ## EUROPÄISCHE PATENTSCHRIFT

(45) Veröffentlichungstag und Bekanntmachung des Hinweises auf die Patenterteilung:
**07.05.1997 Patentblatt 1997/19**

(51) Int Cl.6: **C08B 11/193**, C04B 24/38

(21) Anmeldenummer: **93101074.8**

(22) Anmeldetag: **25.01.1993**

(54) **Verwendung von wasserlöslichen Sulfoalkylhydroxalkylderivaten der Cellulose in gips- und zementhaltigen Massen**

Use of water soluble sulfoalkyl hydroxyalkyl derivatives of cellulose in gypsum and cement compositions

Application de dérivés sulfoalkylhydroxyalkyl de cellulose dans les plâtres et les ciments

(84) Benannte Vertragsstaaten:
**BE DE FR GB IT NL SE**

(30) Priorität: **07.02.1992 DE 4203529**

(43) Veröffentlichungstag der Anmeldung:
**11.08.1993 Patentblatt 1993/32**

(73) Patentinhaber: **Wolff Walsrode Aktiengesellschaft**
**D-29655 Walsrode (DE)**

(72) Erfinder:
• **Kiesewetter, René, Dr.**
**W-3040 Soltau-Ahlften (DE)**
• **Szablikowski, Klaus, Dr.**
**W-3030 Walsrode (DE)**

• **Lange, Werner, Dr.**
**W-2722 Visselhövede (DE)**

(74) Vertreter: **Braun, Rolf, Dr. et al**
**Bayer AG**
**Konzernbereich RP**
**Patente und Lizenzen**
**51368 Leverkusen (DE)**

(56) Entgegenhaltungen:
EP-A- 0 319 867          GB-A- 2 138 014
US-A- 2 795 508          US-A- 3 357 971

• **DATABASE WPI Week 8713, Derwent Publications Ltd., London, GB; AN 87-090965**

## Beschreibung

Die Erfindung betrifft die Verwendung wasserlöslicher ionischer Cellulosederivate als Additiv für gips- und zementhaltige Massen.

Wasserlösliche Celluloseether, wie Hydroxyethylcellulose (HEC), Hydroxypropylcellulose (HPC), Methylcellulose (MC) und Mischether hieraus, sind schon seit langem unverzichtbare Hilfsmittel für verschiedene Bauwerkstoffe. Ihr Einsatzgebiet reicht vom Mauerwerk und Putzsystem der Außenwand über Gips- und Zementputze, Fugenfüller bis hin zu Spachtelmassen.

Die für die Verbesserung der Verarbeitbarkeit von Putzsystemen eingesetzten Celluloseether sind überwiegend nichtionischer Natur. Für die Verarbeitung von Gips-, Kalk- und Zementsystemen werden insbesondere Methylcellulosen bzw. deren Hydroxyalkylcellulosemischether eingesetzt. Der Kontrolle des Wasserhaushaltes im Putzsystem kommt hierbei eine überragende Bedeutung zu, da hierdurch die Verarbeitbarkeit, die Plastizität, das Abbindeverhalten, die Klebrigkeit, die "Offenzeit", der Luftporengehalt, das Standvermögen u.a. beeinflußt werden.

Für die Verbesserung des rheologischen Eigenschaftsprofils der kommerziell erhältlichen, nichtionischen Celluloseether, wie z.B. der Hydroxyethylcellulose, wurden verschiedenste Hydrophobierungen vorgenommen (siehe z.B. US-PS 3.091.542, US-PS 3.272.640, US-PS 3.435.027, DE-OS 2 120 439). Die Umsetzungen einer Hydroxyethylcellulose mit langkettigen alkylgruppen- bzw. 3-alkoxy-2-hydroxypropylgruppenübertragenden Verbindungen und deren Einsatz im Baustoffsektor allein oder als Abmischung mit Methylcellulosederivaten (z.B. DE-OS 3 020 689, DE-OS 3 004 161, US-PS 4.845.207, US-PS 4.784.693, DE-OS 3 909 070, EP 0 362 769) mit dem Ziel eines verbesserten rheologischen Eigenschaftsprofils führten bisher nicht zu dem erhofften Ergebnis. Darüber hinaus ist z.B. die Anknüpfung langkettiger Alkylgruppen an die Cellulosekette bzw. Hydroxyethylcellulose mit sehr schlechten Ausbeuten behaftet, was unvertretbare ökologische Belastungen, hohe Produktkosten u.a. zur Folge hat.

Der Einsatz von ionischen Celluloseethern als Additiv für Mörtel-, Spachtel- und/oder Putzmassen auf Gips- und/oder Zementbasis ist an sich nicht neu. Aus US-PS 2.844.480, EP 0 269 015, US-PS 4.707.187, US-PS 4.462.837, US-PS 3.446.795, US-PS 4.707.188, US-PS 2.852.402 und DE 3 126 489 sind z.B. Methylcarboxymethylcelluloseether bzw. Carboxymethylhydroxyalkylcelluloseether bekannt, die als Mörtelzusatzstoffe, Additive für Unterwasserbeton sowie als Wasserverminderer für geologische Formationen eingesetzt werden. Danach führt z.B. ein Zusatz von 0,05 bis 1 % Carboxymethylhydroxyethylcellulose zu einer Verbesserung der Verarbeitbarkeit des Putzsystems, was sich gegenüber einer handelsüblichen Methylhydroxypropylcellulose (MHPC) bzw. Methylhydroxyethylcellulose (MHEC) in Form einer leichteren Verarbeitbarkeit, aufgrund eines verminderten Luftporengehaltes ausdrücken soll. Nachteilig hierbei ist jedoch die stark verflüssigende Wirkung des Putzsystems. Die somit erzielte leichtere Verarbeitbarkeit geht daher mit einem - gegenüber einer handelsüblichen MHEC bzw. MHPC -deutlich schlechteren Standvermögen einher.

Die Umsetzung einer Carboxymethylcellulose mit Ethylenoxid, Propylenoxid oder Methylchlorid führt zwar zu einer Verbesserung der Salz-, Alkali- bzw. Säurestabilität Eine generelle Unverträglichkeit mit insbesondere mehrwertigen Kationen (z.B. $Ca^{2+}$, $Al^3$) läßt sich jedoch nicht vollständig ausschließen. Starke Vergelungen oder Ausflockungen können die Folge sein (L. Brandt in: Ullmanns Encyclopedia of Industrial Chemistry, Vol. 5 A, Verlag Chemie, Weinheim/ New York, 1986, Seite 479 ff, s. auch DE-OS 3 126 489 und W. Hansi in: Dtsch. Farben Ztschr. 25, 1971, S. 493 ff).

Aufgabe der Vorliegenden Erfindung war es daher, einen Celluloseether als Hilfsstoff einzusetzen, der die o.g. Nachteile vermeidet, einfach und in guten Ausbeuten herstellbar ist und über ein gegenüber den kommerziell erhältlichen Celluloseethern (HEC, MHEC, MHPC) verbessertes Wasserrückhaltevermögen verfügt, was wiederum eine Verbesserung anwendungstechnischer Parameter zur Folge hat (z.B. Standvermögen, "Offenzeit" u.a.).

Es wurde nun gefunden, daß wasserlösliche sulfoalkylhydroxyalkylsubstituierte Cellulosederivate, insbesondere Sulfoethylhydroxyethyl-, Sulfoethylhydroxypropyl-, Sulfoethylhydroxybutyl- oder Sulfoethyldihydroxypropylderivate der Cellulosen rnit zusätzlichen Hydroxyethyl-, Hydroxypropyl-, Hydroxybutyl-, Dihydroxypropyl-, Alkyl-, speziell Methyl-, Aryl-, speziell Phenyl-, Arylalkyl-, speziell Benzyl- und/oder Alkoxyhydroxyalkyl-, speziell 3-Alkoxy-2-hydroxyalkylgruppen als Substituent, überraschend verbesserte Eigenschaften gegenüber solchen Gips- und Zementmassen aufweisen, die als Additive herkömmliche, nichtionische Methylcellulose-, Hydroxyalkyl- und/oder Methylhydroxyalkylcellulosederivate enthalten.

Die erfindungsgemäß verwendeten Cellulosederivate sind vollständig in Wasser löslich, verbessern das Wasserrückhaltevermögen des Putzsystems entscheidend und können nach einem der unten beschriebenen Verfahren entweder durch Modifizierung eines Celluloseethers (z.B. MC, HEC) oder direkt aus Cellulose hergestellt werden. Für die Synthese sulfoalkylhydroxyalkylsubstituierter Cellulosederivate sind z.B. folgende Verbindungen einsetzbar:

◊   Hydroxyethylcellulose        (HEC),
◊   Hydroxypropylcellulose        (HPC),
◊   Hydroxybutylcellulose        (HBC),
◊   Dihydroxypropylcellulose        (DHPC),
◊   Methylcellulose        (MC),

◊   Methylhydroxypropylcellulose        (MHPC),
◊   Methylhydroxyethylcellulose        (MHEC),
◊   Methylhydroxybutylcellulose        (MHBC),
◊   Ethylcellulose        (EC),
◊   Hydroxypropylhydroxyethylcellulose        (HPHEC),
◊   Hydroxyethylhydroxybutylcellulose        (HEHBC),
◊   Carboxymethylcellulose        (CMC),
◊   Sulfoethylcellulose        (SEC),

Die o.g. Verbindungen können als einfache, binäre oder ternäre Celluloseether wie auch als Abmischungen verschiedener Celluloseether mit Sulfoalkylgruppen-, speziell sulfoethylgruppenübertragenden Verbindungen und/oder hydroxyalkylgruppenübertragenden Reagenzien modifiziert werden. Die für die Modifizierung der Cellulose bzw. Cellulosederivate verwendeten Reagenzien werden an das Substrat über eine Urethan-, Ester-, insbesondere aber Etherbindung gebunden.

Die erfindungsgemäß eingesetzten anionischen Cellulosederivate besitzen durchschnittliche Substitutionsgrade (DS) durch Sulfoethylgruppen von 0,001 bis 0,6, vorzugsweise von 0,01 bis 0,5. Der durchschnittliche Substitutionsgrad (DS) durch Alkyl-, Aryl- bzw. Aryl-Alkylgruppen liegt bei DS = 0,0001 bis 2,5, insbesondere bei 0,001 bis 2,0. Der durchschnittliche Substitutionsgrad (MS) der mit katalytischen Mengen Alkali reagierenden Verbindungen (z.B. Epoxide, Glycidylether) liegt bei MS = 0,0001 bis 5, insbesondere bei 0,001 bis 4. Der durchschnittliche Polymerisationsgrad der Cellulosederivate liegt zwischen ca. 30 und ca. 4 000, insbesondere zwischen 1 000 und 2 500.

Die genannten sulfoalkylhydroxyalkylsubstituierten Cellulosederivate werden auf Basis der obengenannten Celluloseether, insbesondere aber auf Basis Sulfoethylcellulose (SEC), bevorzugt in Anwesenheit von organischen Suspensionsmitteln, hergestellt. Als Suspensionsmittel werden aromatische und/oder aliphatische Kohlenwasserstoffe, Ketone, Sulfoxide, cyclische Ether oder niedere Alkohole mit vorzugsweise 2 bis 5 Kohlenstoffatomen pro Molekül sowie Gemische dieser Lösungsmittel eingesetzt Vorzugsweise wird Isopropanol und/oder 2-Methyl-propan-2-ol (tertiär-Butanol) bzw. Mischungen hieraus verwendet.

Die Cellulosederivate können auch direkt aus Cellulose hergestellt werden. Eine hydrophobmodifizierte Hydroxyethylsulfoethylcellulose kann z.B. in der Weise dargestellt werden, daß zunächst der Zellstoff zu einer Mischung aus einem inerten organischen Suspensionsmittel und einem Alkalimetallhydroxid gegeben wird. Das sulfoalkylgruppenübertragende Reagenz, insbesondere Vinylsulfonsäure-Natriumsalz, wird dann eingetragen und mit der Alkalicellulose zur Reaktion gebracht Nach beendeter Reaktion wird das Alkali gegebenenfalls neutralisiert oder mit wäßrig-organischen Lösungsmittelgemischen extrahiert. Ein Teil des verwendeten Alkali kann jedoch gegebenenfalls im Produkt verbleiben und für weitere Umsetzungen eingesetzt werden Die Sulfoalkylcellulose, insbesondere Sulfoethylcellulose, kann gegebenenfalls in der in der Cellulosechemie üblichen Weise aufgearbeitet werden (siehe z.B. K. Engelskirchen, in Houben-Weyl's "Makromolekulare Stoffe", Band E 20/III, Seite 2 051 ff, Herausgeber A. Barth, J. Falbe, Georg Thieme Verlag/Stuttgart, 1987) und gegebenenfalls in einem Gemisch eines inerten, organischen Suspensionsmittels und einem Alkalimetallhydroxid suspendiert und mit Ethylenoxid zur Reaktion gebracht werden. Die sich gegebenenfalls daran anschließende Umsetzung mit Hydrophobierungsreagenzien - wie z.B. Propylenoxid, n-Butylglycidether, Methyl- oder Benzylchlorid - wird vorzugsweise in demselben organischen Suspensionsmittel durchgeführt. Nach beendeter Reaktion werden die gegebenenfalls noch vorliegenden Mengen an Alkali neutralisiert oder mit einem organisch-wäßrigen Lösungsmittelgemisch extrahiert. Das Produkt wird in der bekannten Weise aufgearbeitet und findet als Additiv für gips- und zementhaltige Massen Verwendung.

Die anionischen, in Wasser löslichen Produkte besitzen Sulfoalkyl-, insbesondere Sulfoethylsubstitutionsgrade von 0,001 bis 0,6, insbesondere von 0,01 bis 0,5. Die Fluidität bzw. das Wasserrückhaltevermögen der sulfoethylierten Cellulosederivate wird im wesentlichen durch den Sulfoethylsubstitutionsgrad bestimmt Ein Substitutionsgrad durch Sulfoethylgruppen von >0,6 ist nicht sinnvoll für Anwendungen in Systemen, die ein Stehvermögen erfordern, da es dann zu einer zunehmend verflüssigenden Wirkung und einer damit einhergehenden verschlechterten Standfestigkeit des Putzsystems kommen kann.

Bevorzugte sulfoalkylgruppenübertragende Verbindungen sind Chlorethansulfonsäure, Bromethansulfonsäure, Vinylsulfonsäure und deren Salze, insbesondere deren Natriumsalze.

Als Ausgangsmaterial werden gemahlene Cellulosen, insbesondere Linters-, Nadelholzsulfit-, Nadelholzsulfat- oder Laubholzzellstoffe verwendet Als Ausgangsmaterialien können ebenfalls kommerziell erhältliche Celluloseether, wie z.B. Hydroxyethyl- bzw. Hydroxypropylcellulosen, Methyl- bzw. Methylhydroxyethyl- bzw. Methylhydroxypropylcelluloseether, Ethylhydroxyethylcellulose und Ethylcellulose verwendet werden.

Die Herstellung der sulfoethylhydroxyalkylsubstituierten Cellulosederivate wird bevorzugt in einem zylindrischen Reaktionsgefäß durchgeführt, welches mit einem geeigneten Rühraggregat versehen ist und eine ausreichende Durchmischung der heterogenen Reaktionsmasse gewährleistet. Das Reaktionsgefäß ist vorzugsweise geschlossen, um eine Reaktionsführung unter Stickstoffatmosphäre zu ermöglichen.

Eine ausreichende Möglichkeit zur Temperierung des Gefäßes ist vorzugsweise ebenfalls vorhanden.
Das Verfahren gliedert sich in folgende Reaktionsschritte:

a) Umsetzung von Cellulose oder eines Cellulosederivates mit Alkali in Anwesenheit mindestens eines Veretherungsmittels (Sulfoalkylierungsmittel - wie z.B. Vinylsulfonsäure-Natriumsalz - und/oder hydroxyalkylgruppenübertragende Verbindung - wie z.B. Ethylenoxid - und/oder Hydrophobierungsmittel - wie z.B. Methylchlorid -), das eine mindestens katalytische Menge einer Base benötigt.

b) Gegebenenfalls weitere Veretherung mit mindestens einem Veretherungsmittel (hydroxyalkylgruppenübertragende Verbindung, Sulfoalkylierungsmittel, Hydrophobierungsmittel).

c) Gegebenenfalls Neutralisation und Aufarbeitung durch Extraktion mit wäßrig-organischen Lösungsmittelgemischen oder - sofern die Produkte thermische Flockpunkte aufweisen - mittels heißem Wasser.

Als hydroxyalkylgruppenübertragende Verbindungen werden bevorzugt Ethylenoxid (EO), Propylenoxid (PO), Butylenoxid (BO) und Glycidol eingesetzt. Als Sulfoalkylveretherungsmittel wird Halogenethan- bzw. Vinylsulfonsäure, insbesondere Vinylsulfonsäurenatriumsalz, verwendet. Hydrophobierungsmittel sind Epoxide (z.B. Propylenoxid, Butylenoxid, Styroloxid, Cyclopentenoxid, Cyclohexenoxid), Alkylhalogenide (z.B. Methylchlorid, Ethylchlorid), Arylalkylhalogenide (z.B. Benzylchlorid) und aryloxy-, bzw. alkoxy-hydroxyalkyl-, bzw. -hydroxyaryl-, bzw. -hydroxyalkylaryl-, speziell 3-alkoxy-2-hydroxypropylgruppenübertragende Reagenzien (z.B. Isopropylglycidether, n-Butylglycidether, 2-Ethylhexylglycidether, Allylglycidether).

Die sulfoethylsubstituierten Cellulosederivate besitzen Viskositäten von 5 bis 60 000 mPa.s (gemessen in 2 gew.-%iger wäßriger Lösung bei einem Schergefälle von D = 2,5 s$^{-1}$ bei 20°C). Die Viskositätsstufen der Produkte lassen sich durch Ausschluß oder Zugabe von oxidierenden Substanzen, wie z.B. Luft, $H_2O_2$, Metalloxiden und die Auswahl der eingesetzten Zellstoffe, die unterschiedliche Durchschnittspolymerisationsgrade aufweisen, einstellen.

Die Alkalisierung der Cellulose bzw. des Celluloseethers erfolgt in der Regel mit einem Alkalimetallhydroxid, insbesondere Natriumhydroxid, das in fester oder gelöster Form (als wäßrige Alkalimetallhydroxidlösung beispielsweise in 18 bis 50 gew.-%iger Form) eingesetzt wird.

Um zu gleichmäßig veretherten Produkten zu gelangen und lokale Überhitzungen zu vermeiden, erfolgt die Alkalisierung der Cellulose bzw. des Celluloseethers und die nachfolgende, mit mindestens einem Veretherungsmittel vorgenommene Umsetzung bevorzugt in Anwesenheit von organischen Lösungsmitteln.

Die Veretherungsmittel (Alkylenoxid, Vinylsulfonsäure-Natriumsalz, Hydrophobierungsmittel) können zusammen eingegeben werden und zunächst bei vorzugsweise 10 bis 60°C und anschließend bei 40 bis 120°C und 0,5 bis 6 Stunden Reaktionszeit mit dem Alkali reagieren. Bevorzugt wird das Vinylsulfonsäure-Natriumsalz - vorzugsweise mit organischen Suspensionsmitteln - zuerst mit der Alkalicellulose umgesetzt, wobei die sich daran anschließende Mischveretherung mit bzw. ohne eine Reinigung bzw. Neutralisation der in der ersten Stufe hergestellten Sulfoethylcellulose erfolgt. Insbesondere wird der Gehalt an Alkali nach der ersten Veretherungsstufe durch Neutralisation oder Extraktion mit wäßrig-organischen Lösungsmittelgemischen abgesenkt und noch vorhandene Natronlauge vorteilhaft für die zweite Veretherungsstufe eingesetzt. Die weitere Umsetzung mit Alkylenoxiden und/oder Hydrophobierungsmitteln kann in Gegenwart oder in Abwesenheit von organischen Suspensionsmitteln bei Temperaturen von zunächst 10 bis 60°C und später von 40 bis 120°C und 0,5 bis 6 Stunden Reaktionszeit ausgeführt werden.

Umgekehrt kann die Veretherung auch so vorgenommen werden, daß in der ersten Veretherungsstufe die Umsetzung von Cellulose mit einem Alkylenoxid und einem Hydrophobierungsmittel erfolgt und nachfolgend das Vinylsulfonsäure-Natriumsalz bei 40 bis 120°C, vorzugsweise in inerten organischen Suspensionsmitteln, insbesondere Isopropanol und/oder tertiär-Butanol, umgesetzt wird. Eine sich daran anschließende Umsetzung mit weiteren Alkylenoxiden und/oder Hydrophobierungsmitteln ist gegebenenfalls möglich.

Das so erhaltene Produkt wird gegebenenfalls neutralisiert und vom gegebenenfalls vorhandenen Slurrymedium abgetrennt und durch Waschen mit inerten, organischen oder wäßrig-organischen Lösungsmittelgemischen, wie z.B. Alkoholen, Alkohol-Wasser-Gemischen, Ketonen bzw. Keton-Wasser-Gemischen von Nebenprodukten und gegebenenfalls noch vorliegenden Mengen Alkali bzw. anhaftenden Salzen befreit. Die Reinigung kann, wenn es sich bei der Veretherung um einen 2- bzw. 3-Stufenprozeß handelt, nach der ersten als auch nach der zweiten Stufe mit organischwäßrigen Lösungsmittelgemischen vorgenommen werden. Bei Einsatz stöchiometrischer Mengen von alkaliverbrauchenden Reagenzien, wie z.B. Methylchlorid, Ethylchlorid, Benzylchlorid, kann auf eine Neutralisation verzichtet werden.

Aufgrund der in der zweiten bzw. dritten Stufe gegebenenfalls vorliegenden katalytischen Menge an Alkali ist es hier auch möglich, entweder das überschüssige Alkali durch geeignete, inerte, z.B. wäßrig-alkoholische Lösungsmittelgemische auszuwaschen und damit die Neutralisation zu umgehen oder bei einer Neutralisation die geringen Mengen an Salzen im Produkt zu belassen und auf eine Reinigung zu verzichten.

Besitzen die Produkte thermische Flockpunkte, so ist eine Reinigung mit heißem Wasser bei Normal- oder geringem Überdruck vorteilhaft

Die sulfoethylhydroxyalkylmodifizierten Cellulosederivate weisen sehr gute Säure- und Alkalibeständigkeiten auf und sind im Unterschied zu Carboxymethylcellulosederivaten mit einer Vielzahl von insbesondere mehrwertigen Kationen (speziell $Ca^{2+}$, $Al^{3+}$) ausgezeichnet verträglich.

Die sulfoalkylhydroxyalkyl-, insbesondere sulfoethylhydroxyalkylmodifizierten Cellulosederivate werden als Zusatzstoffe für gips- und zementhaltige Massen eingesetzt. Die Menge des den gips- und zementhaltigen Massen zuzusetzenden Produktes ist vom jeweiligen speziellen Anwendungszweck abhängig. Bei Verputzmassen auf Gipsbasis beträgt die zuzusetzende Additivmenge bevorzugt 0,05 bis 0,5 Gew.-%, bezogen auf die Gesamttrockenmasse, bei Zementverputzmassen dagegen 0,02 bis 0,3 Gew.-%, bezogen auf die Gesamttrockenmasse. Die bei Spachtelmassen zuzusetzende Menge kann jedoch höher liegen. Bei Spachtelmassen auf Gipsbasis liegt sie im Bereich von 0,1 bis 2 Gew.-%, bei Spachtelmassen auf Zementbasis bei 0,1 bis 1 Gew.-%.

Bei den Celluloseethern haben die Bezeichnungen "DS" (Degree of Substitution) und "MS" (molarer Substitutionsgrad) die übliche Bedeutung.

In jeder Anhydroglukoseeinheit des Cellulosemoleküls sind drei Hydroxylgruppen vorhanden.

DS:    Durchschnittsanzahl der in der Cellulose substituierten Hydroxylgruppen pro Anhydroglukoseeinheit

MS:    Durchschnittsanzahl der Mole, der mit der Cellulose kombinierten Reaktionspartner pro Anhydroglukoseeinheit.

Die Erfindung wird nachfolgend anhand von Ausführungsbeispielen sowie von Vergleichsbeispielen näher erläutert (die Angabe "Teile" bezieht sich immer auf Gew.-Teile).

Herstellung einer hydrophobmodifizierten Hydroxyethylsulfoethylcellulose auf Basis Hydroxyethylcellulose (Beispiele 1,2,3,4,5; Ausführung für Beispiel 3).

225 Teile einer Hydroxyethylcellulose (HEC, MS = 2,5; Feuchte: 5,1 %) werden in etwa 2 000 Teilen einer Mischung aus 8 Teilen Aceton und 2 Teilen Wasser eingegeben. Nach 12 Stunden wird der Celluloseether abfiltriert und mit etwa 2 000 Teilen reinem Aceton gewaschen. Der Celluloseether wird scharf abgesaugt und für die weitere Umsetzung in ein zylindrisches, in geeigneter Weise thermostatisierbares Reaktionsgefäß, das mit einem geeigneten Rühraggregat versehen ist, eingegeben. Der Celluloseether wird in 2 180 Teilen tertiär-Butanol unter Stickstoffatmosphäre suspendiert. Nach Zugabe von 96 Teilen Wasser, 169 Teilen einer 30,2 gew.-%igen wäßrigen Vinylsulfonsäure-Natriumsalzlösung und 18,3 Teilen des Hydrophobierungsmittels (hier: Isopropyl-Glycidether) wird die Mischung 15 Minuten lang gründlich durchmischt. Nach Zugabe von 15,7 Teilen Natriumhydroxid-Plätzchen (Prills) wird 30 Minuten lang bei 25°C alkalisiert, in 60 Minuten auf 75°C aufgeheizt und 180 Minuten bei dieser Temperatur verethert. Der Ansatz wird durch Zugabe einer äquimolaren Menge konzentrierter Essigsäure neutralisiert, das Produkt abfiltriert und viermal mit je 2 000 Teilen einer Mischung aus 8 Teilen Aceton und 2 Teilen Wasser und anschließend noch mit 2 000 Teilen reinem Aceton gewaschen. Das Produkt wird im Umlufttrockenschrank bei 50°C getrocknet. Die Produktherstelldaten für die Beispiele 1,2,3,4 und 5 gehen aus Tabelle 1 hervor.

Herstellung einer Hydroxyethylhydroxypropylsulfoethylcellulose aus Fichtensulfit-Zellstoff (Beispiel 6).

87,1 Teile eines feingemahlenen, gebleichten und veredelten Fichtensulfit-Zellstoffes (Feuchte: 6,9 %) werden in einem Druckreaktor mit einem wandgängigen Flügelrührer in 1 066 Teilen tertiär-Butanol suspendiert und der Reaktor mit Stickstoff gespült. 12,9 Teile einer 50,5 gew.-%igen Vinylsulfonsäure-Natriumsalzlösung und 137,6 Teile Wasser werden hinzugegeben und die Mischung 15 Minuten lang gerührt. 30 Teile Natrimhydroxid-Plätzchen (Prills) werden hinzugegeben. Nach einer Alkalisierungszeit von 60 Minuten bei 25°C werden 11 Teile Ethylenoxid und 116 Teile Propylenoxid aufgedüst. Das Reaktionsgemisch wird innerhalb von 100 Minuten auf 80°C erhitzt. Diese Temperatur wird 180 Minuten lang gehalten. Mit einer äquimolaren Menge konzentrierter Essigsäure wird neutralisiert, das Produkt abfiltriert und dreimal mit je 2 000 Teilen einer Mischung aus 8 Teilen Aceton und 2 Teilen Wasser und schließlich noch mit reinem Aceton gewaschen. Das Produkt wird im Umlufttrockenschrank bei 50°C getrocknet.

Die erfindungsgemäß beanspruchten Celluloseether wurden mit einem fertig formulierten Gips-Maschinen-Putz (Anhydrit-Stuckgips, Kalksteinsand, Kalkhydrat, Verzögerer) ausgetestet. Die Zusammensetzung des Putzsystems kann, neben dem anionischen Cellulosederivat, weitere Zusätze enthalten, die die Eigenschaften und das rheologische Verhalten des Putzsystems verbessern. Als Zusätze können z.B. Verzögerer, Abbindebeschleuniger, Entschäumer, Luftporenbildner und Hydrophobierungsmittel eingesetzt werden (s. hierzu auch: I. Schrage in "Ullmanns Encyclopädie der technischen Chemie", Bd. 9, Verlag Chemie, Weinheim/New York, 1974, Seite 312 ff und dort zitierte Literatur).

In den nachfolgend aufgeführten Tabellen bedeuten Mengenangaben Gewichtsteile. Die Messung der Viskositäten erfolgte mit einem Rotationsviskosimeter Haake, Typ RV 100, System M 500, Meßeinrichtung MV, nach DIN 53 019, bei einem Schergefälle von D = 2,5 $s^{-1}$, bei einer Temperatur von 20°C. Es wurden jeweils 2 gew.-%ige Lösungen in destilliertem Wasser gemessen. Die Celluloseether wurden mittels einer Siebmaschine mit Sieben nach DIN 4188 ausgesiebt. Dabei kamen folgende zwei Fraktionen in das Putzsystem:

45 % < 0,063 mm,

55 % < 0,25 mm.

Zur Austestung wurde ein fertig formulierter Gipsmaschinenputz bereitgestellt und nach DIN 18 555, Teil 2, die Konsistenz durch Ermittlung des Ausbreitmaßes bestimmt. Die Bestimmung des Wasserrückhaltevermögens erfolgte nach DIN 18 555, Teil 7. Der Wasser-Feststoff-Faktor wurde eingestellt. Die erfindungsgemäß beanspruchten sulfoethylhydroxyalkylsubstituierten Cellulosederivate wurden jeweils mit einer handelsüblichen Methylhydroxyethylcellulose entsprechender Viskosität verglichen.

In Tabelle 1 sind die Herstellbedingungen, in Tabelle 2 die Substitutionsgrade und in Tabelle 3 die Ergebnisse der Austestung verschiedener sulfoethylhydroxyalkylsubstituierter Cellulosederivate im Vergleich mit einer handelsüblichen droxyethylcellulose (Walocel® M) vergleichbarer Viskosität aufgeführt. Die Ergebnisse stellen Mittelwerte aus jeweils zwei Messungen dar.

Tabelle 1: Sulfoethylhydroxyalkylmodifizierte Celluloseether/Herstelldaten

| Nr. | tertiär-Butanol (Teile) | Linters-zellstoff- (Teile) | Celluloseether HEC[3] SEC[4] (Teile) | VSSNa-Lösung[5] (Teile) (Gew.-%) | | NaOH-Lösung (Teile) (Gew.-%) | | Reagenz[6] IPGE PO BO EO (Teile) | | | | $H_2O$ (Teile) | Alkali-sierzeit (min) | Aufheiz-zeit (min) | Reaktions-zeit (min) | tempe-ratur (°C) |
|---|---|---|---|---|---|---|---|---|---|---|---|---|---|---|---|---|
| 1 | 2.325 | - | 225 - | 59,5 | 51,6 | 15,7 | 100 | - | - | 339 | - | 13,6 | 30 | 60 | 60 | 75 |
| 2 | 2.325[1] | - | 225 - | 59,5 | 51,6 | 15,7 | 100 | - | - | 113 | - | 13,6 | 30 | 60 | 300 | 75 |
| 3 | 2.180 | - | 225 - | 169,0 | 30,2 | 15,7 | 100 | 18,3 | - | - | - | 96,0 | 30 | 60 | 180 | 75 |
| 4 | 2.180 | - | 226 - | 169,2 | 30,2 | 15,7 | 100 | 54,8 | - | - | - | 96,3 | 30 | 60 | 180 | 75 |
| 5 | 2.180 | - | 226 - | 169,2 | 30,2 | 15,7 | 100 | 73,0 | - | - | - | 96,3 | 30 | 60 | 180 | 75 |
| 6 | 1.066 | 87,1[2] | - - | 12,9 | 50,5 | 30,0 | 100 | - | 116 | - | 11 | 137,6 | 60 | 100 | 180 | 80 |

[1] Isopropanol
[2] Fichtensulfit-Zellstoff
[3] Hydroxyethyl-Cellulose (MS = 2,5)
[4] Sulfoethylcellulose
[5] Vinylsulfonsäure-Natriumsalz-Lösung
[6] IPGE: Isopropylglycidether
   PO:   Propylenoxid
   BO:   Butylenoxid
   EO:   Ethylenoxid

EP 0 554 749 B1

Tabelle 2: Sulfoethylhydroxyalkylmodifizierte Celluloseether

Substitutionsgrade

| Nr. | Celluloseether | $DS_{SE}$[1] | $MS_{HE}$[2] | $MS_{HP}$[3] | $MS_{HB}$[4] | $MS_{IP}$[5] |
|---|---|---|---|---|---|---|
| 1 | Hydroxyethyl-Hydroxybutyl-Sulfo-ethylcellulose | 0,11 | 3,07 | --- | 0,29 | --- |
| 2 | Hydroxyethyl-Hydroxybutyl-Sulfo-ethylcellulose | 0,16 | 3,17 | --- | 0,34 | --- |
| 3 | 3-(2'-Methyl)-Ethoxy-2-hydroxypro-pyl-Hydroxyethyl-Sulfoethylcellu-lose | 0,24 | 3,2 | --- | --- | 0,058 |
| 4 | 3-(2'-Methyl)-Ethoxy-2-hydroxypro-pyl-Hydroxyethyl-Sulfoethylcellu-lose | 0,26 | 3,5 | --- | --- | 0,21 |
| 5 | 3-(2'-Methyl)-Ethoxy-2-hydroxypro-pyl-Hydroxyethyl-Sulfoethylcellu-lose | 0,31 | 3,6 | --- | --- | 0,295 |
| 6 | Hydroxyethyl-Hydroxypropyl-Sulfo-ethylcellulose | 0,04 | 0,63 | 0,69 | --- | --- |

[1] = Durchschnittlicher Substitutionsgrad durch Sulfoethylgruppen
[2] = Molekularer Substitutionsgrad durch Hydroxyethylgruppen
[3] = Molekularer Substitutionsgrad durch Hydroxypropylgruppen
[4] = Molekularer Substitutionsgrad durch Hydroxybutylgruppen
[5] = Molekularer Substitutionsgrad durch 3-(2'-Methyl)-Ethoxy-2-hydroxypropylgruppen

EP 0 554 749 B1

Tabelle 3: Sulfoethylhydroxyalkylmodifizierte Celluloseether

Anwendungstechnische Austestungen im Baustoffbereich

| Nr. | Celluloseether | Viskosität [1] [mPa.s] | W/F[2] | ABM[3] [mm] | WRV[4] [%] | Vergleichsprobe [6] | | |
|---|---|---|---|---|---|---|---|---|
| | | | | | | W/F[2] | ABM[3] [mm] | WRV[4] [%] |
| 1 | Hydroxyethyl-Hydroxybutyl-Sulfo-ethylcellulose | 13.020 | 0,46 | 168 | 93,8 | 0,46 | 166 | 92,0 |
| 2 | Hydroxyethyl-Hydroxybutyl-Sulfo-ethylcellulose | 10.150 | 0,46 | 173 | 93,2 | 0,46 | 166 | 92,0 |
| 3 | 3-(2'-Methyl)-Ethoxy-2-hydroxypro-pyl-Hydroxyethyl-Sulfoethylcellu-lose | 25.083 | 0,46 | 163 | 98,2 | 0,46 | 166 | 94,6 |
| 4 | 3-(2'-Methyl)-Ethoxy-2-hydroxypro-pyl-Hydroxyethyl-Sulfoethylcellu-lose | 20.660 | 0,48 | 167 | 95,1 | 0,48 | 172 | 92,7 |
| 5 | 3-(2'-Methyl)-Ethoxy-2-hydroxypro-pyl-Hydroxyethyl-Sulfoethylcellu-lose | 21.020 | 0,48 | 159 | 93,7 | 0,48 | 172 | 92,7 |
| 6 | Hydroxyethyl-Hydroxypropyl-Sulfo-ethylcellulose | 11.470 | 0,46 | 171 | 93,2 | 0,46 | 166 | 92,0 |

[1] = Viskosität einer 2 gew.-%igen Lösung bei 20°C, gemessen mit einem Rotationsviskosimeter Haake, Typ RV 100, bei einem Schergefälle von $D = 2,5 \text{ s}^{-1}$

[2] = Wasser-Feststoff-Faktor

[3] = Ausbreitmaß

[4] = Wasserrückhaltevermögen

[5] = Methylhydroxyethylcellulose, Walocel ® M (Wolff Walsrode AG)

**Patentansprüche**

1. Verwendung von wasserlöslichen, ionischen, ternären sulfoalkylhydroxyalkylmodifizierten Cellulosederivaten mit einem Sulfoalkylsubstitutionsgrad (DS) von 0,001 bis 0,6 als Additiv für Gips- und/oder zementhaltige Massen.

2. Verwendung nach Anspruch 1, dadurch gekennzeichnet, daß es sich bei dem ternären sulfoalkylhydroxyalkylmodifizierten Cellulosederivat um ein Cellulosederivat auf Basis Sulfoethylhydroxyethylcellulose handelt.

3. Verwendung nach Anspruch 1, dadurch gekennzeichnet, daß es sich bei dem ternären sulfoalkylhydroxyalkylmodifizieden Cellulosederivat um ein Cellulosederivat auf Basis Sulfoethylhydroxypropylcellulose handelt.

4. Verwendung nach Anspruch 1, dadurch gekennzeichnet, daß es sich bei dem ternären sulfoalkylhydroxyalkylmodifizieden Cellulosederivat um ein Sulfoethylhydroxybutylcellulosederivat handelt.

5. Verwendung nach einem der Ansprüche 1 bis 5, dadurch gekennzeichnet, daß das wasserlösliche, Sulfoalkylhydroxyalkylcellulosederivat zusätzlich mit Epoxiden und/oder Alkyl- und/oder Arylalkylhalogeniden und/oder 3-alkyloxy-2-hydroxypropylgruppenübertragenden Reagenzien umgesetzt wurde.

**Claims**

1. Use of water-soluble ionic ternary sulphoalkyl hydroxyalkyl-modified cellulose derivatives whereof the degree of substitution (DS) with sulphoalkyl groups is from 0.001 to 0.6, as an additive for compositions containing gypsum and/or cement.

2. Use according to Claim 1, characterised in that the ternary sulphoalkyl hydroxyalkyl-modified cellulose derivative is a cellulose derivative based on sulphoethyl hydroxyethyl cellulose.

3. Use according to Claim 1, characterised in that the ternary sulphoalkyl hydroxyalkyl-modified cellulose derivative is a cellulose derivative based on sulphoethyl hydroxypropyl cellulose.

4. Use according to Claim 1, characterised in that the ternary sulphoalkyl hydroxyalkyl-modified cellulose derivative is a cellulose derivative based on sulphoethyl hydroxybutyl cellulose.

5. Use according to one of Claims 1 to 5, characterised in that the water-soluble, sulphoalkyl hydroxyalkyl cellulose derivative has been reacted additionally with epoxides and/or alkyl halides and/or arylalkyl halides and/or reagents which transfer 3-alkyloxy-2-hydroxypropyl groups.

**Revendications**

1. Utilisation de dérivés de cellulose hydrosolubles, ioniques, ternaires, modifiés par des groupes sulfoalkylhydroxyalkyle, possédant un degré de substitution sulfcalkyle (DS) de 0,001 à 0,6, comme additif pour des matières contenant du plâtre et/ou du ciment.

2. Utilisation selon la revendication 1, caractérisée en ce que, en ce qui concerne le dérivé de cellulose ternaire modifié par des groupes sulfoalkyl- hydroxyalkyle, il s'agit d'un dérivé de cellulose à base de sulfoéthylhydroxyéthylcellulose.

3. Utilisation selon la revendication 1, caractérisée en ce que, en ce qui concerne le dérivé de cellulose ternaire modifié par des groupes sulfoalkyl - hydroxyalkyle, il s'agit d'un dérivé de cellulose à base de sulfoéthylhydroxypropylcellulose.

4. Utilisation selon la revendication 1, caractérisée en ce que, en ce qui concerne le dérivé de cellulose ternaire modifié par des groupes sulfoalkyl - hydroxyalkyle, il s'agit d'un dérivé de sulfoéthylhydroxybutylcellulose.

5. Utilisation selon l'une quelconque des revendications 1 à 5, caractérisée en ce qu'on fait réagir le dérivé hydrosoluble de sulfoalkylhydroxyalkylcellulose en outre avec des époxydes et/ou avec des halogénures d'alkyle et/ou l'arylalkyle et/ou avec des réactifs transférant des groupes 3-alcoxy-2-hydroxypropyle.